# EUROPÄISCHE PATENTANMELDUNG

(11) **EP 2 239 080 A1**
(43) Veröffentlichungstag der Anmeldung: **13.10.2010**
(21) Anmeldenummer: 10003405.7
(22) Anmeldetag: 30.03.2010
(51) Int. Cl.: B23K 9/173, B23K 9/02

(54) **Verfahren und Vorrichtung zum einseitigen Schweißen von Schweißnähten mit einer Doppel-Schweißdüse**

(30) Priorität: 01.04.2009 DE 102009015866
(71) Anmelder: Zeppelin Silos & Systems GmbH, 88012 Friedrichshafen (DE)
(72) Erfinder: Baumgärtner, Michael, 88074 Meckenbeuren (DE); Ameringer, Roger, 88045 Friedrichshafen (DE); Waggershauser, Hermann, 88045 Friedrichshafen (DE); Frey, Daniel, 88271 Wilhelmsdorf-Niederweiler (DE); Vogel, Manfred, 88045 Friedrichshafen (DE)
(74) Vertreter: Riebling, Peter

(57) **Zusammenfassung**

Verfahren und Vorrichtung zum einseitigen Schweißen von Aluminium-Schweißnähten (19a,19b) in Position PC (Querposition), wobei ein Lichtbogen in einem Schutzstrom aus einem inerten Gas zwischen der zugeführten abschmelzenden Elektrode und dem Werkstück abbrennt, wobei in Schweißrichtung hintereinander folgend zwei unterschiedliche Schweißnähte (19a,19b) angeordnet werden, wobei die vorlaufende Schweißnaht (19a) die Wurzel der späteren Schweißnaht bildet, während die nachlaufende Schweißnaht (19b) die Wurzel überdeckt, sich mit dieser wurzelseitigen Schweißnaht abbindet und die endgültige Schweißnaht herstellt.
Die Vorrichtung hat zwei Brenndüsen (12,13) in einer gemeinsamen Gasglocke (2) angeordnet.

## Beschreibung

Die Erfindung betrifft ein Verfahren zum einseitigen Schweißen von Aluminium-Schweißnähten in Position PC (Querposition) unter Verwendung einer Doppelschweißdüse.

Die Erfindung betrifft den Lichtbogenschweißprozess, bei dem eine endlos, abschmelzenden Drahtelektrode unter einer Schutzgasabdeckung zwischen Werkstück und Schweißbrenner abschmilzt (im Falle von Aluminiumschweißnähten als Metall Inertgas Schweißen (MIG) bekannt.

Insbesondere betrifft die vorliegende Erfindung den zuvor benannten Schmelzschweißprozess mit einer speziellen Schutzgaszuführung zwischen Werkstück und der abschmelzenden Elektrode. Die Elektrode ist zugleich der Zusatzwerkstoff.

Bei dem vorher genannten Schweißverfahren bestand, nach bisherigem Stand der Technik, der Nachteil, dass dieses nur in Schweißposition PA (Wannenposition) oder PF (Steigposition) in der geforderten Qualität durchgeführt werden konnte. Bei einer angefertigten Schweißnaht in Position PC im herkömmlichen MIG-Verfahren war das Schweißgut porös.

Aus fertigungstechnischen Gründen werden allerdings auch Schweißnähte in PC (Querposition) angefertigt; dies gilt insbesondere für stehende Behälter. Diese Schweißnähte sind bisher nur unter großem Aufwand herstellbar. Hierbei wird, unter Verwendung eines anderen Schweißverfahrens Wolfram Inertgas Schweißen mit Wechselstrom (WIG ∼) eine doppelseitige oder einseitige Schweißnaht angefertigt, wobei bei diesem Schweißprozess nur eine geringe Schweißgeschwindigkeit aktuellem Stand erreicht werden kann.

Der Erfindung liegt die Aufgabe zugrunde, das MIG-Schweißverfahren für Schweißnähte in PC (Querposition) an Werkstücken durchzuführen, bei welchem hohe Schweißgeschwindigkeiten mit der dafür geforderten Nahtgüte der Schweißnaht gewährleistet sind.

Zur Lösung der gestellten Aufgabe ist das Verfahren durch die technische Lehre des Anspruches 1 gekennzeichnet.

Wesentlich ist, dass unter Anwendung einer Doppelschweißdüse ein einseitiges Schweißen stattfindet, wobei mit oder ohne Schweißbadsicherung geschweißt werden kann; und die beiden Schweißbrenner unter einer gemeinsamen Schutzgasglocke arbeiten.

Der Einsatz einer Schweißbadsicherung dient zur Ausbildung der Wurzel auf der Gegenseite, wobei in diesem Fall die Wurzelausbildung durch Anbringen einer Spannvorrichtung mit entsprechender Nut gesteuert werden kann.

Wesentliches Merkmal der vorliegenden Erfindung ist, dass mit der Doppelschweißdüse in Schweißrichtung hintereinander folgend zwei unterschiedliche Schweißnähte, mit unterschiedlichen Parametern, angefertigt werden können. Wobei, bei der ersten Schweißung, die vorlaufende Schweißnaht die Wurzel bildet und die nachlaufende Schweißnaht die Wurzel überdeckt. Bei größeren Werkstückdicken kann dieser Prozess mehrmals wiederholt werden, in diesem Falle werden durch die hintereinander laufenden Lichtbögen die erforderlichen Fülllagen bzw. Decklagen angefertigt.

Die zuerst geschweißte Schweißraupe kann durch die darüber gelegte, zweite Schweißraupe, wahlweise entsprechend den gewählten Parametern bis zu 100 % wieder aufgeschmolzen werden. Bevorzugt wird ein 30 bis 60 % nochmaliges Aufschmelzen der zuerst geschweißten Schweißnaht (Raupe) durch die nachfolgende Schweißnaht.

Die Vorteile bei der Verwendung dieses zuvor beschriebenen Schweißprozesses, liegen in der, für die Schweißposition PC nun erreichbaren hohen Nahtqualität, sowie einer sehr hohen Schweißgeschwindigkeit von 60-80 cm/min. Dadurch kann die Wirtschaftlichkeit erhöht werden.

Durch die Ausbildung einer Doppelschweißdüse als Schweißvorrichtung wird erreicht, dass die beiden Brennerdüsen in einer gemeinsamen Gasglocke arbeiten und damit wird ein gesteuertes Ausgasen des Schweißrauches erreicht. Der Druck des Schutzgases ist so gewählt, dass der Gasdruck des Bades höher ist als der in der Schutzglocke. Damit wird erreicht, dass das Gas aus dem Schweißnahtbereich zuverlässig ausgasen kann und über den in der Schutzgasglocke erzeugten Schutzgasstrom nach außen geleitet wird.

Die Erfindung ist nicht auf die Anfertigung von Schweißnähten in der Position PC begrenzt, sondern auch in allen anderen Schweißpositionen anwendbar.

Wesentliches Merkmal der vorliegenden Erfindung ist, dass mit der erfindungsgemäßen Doppelschweißdüse eine erste Schweißnaht als Wurzelschweißnaht angefertigt wird, die beim Überdecken mit der zweiten nachlaufenden Schweißnaht zwar noch heiß ist, aber nicht mehr flüssig.

Dabei besteht der Vorteil, dass die Einbrandtiefe größer ist und oberflächig vorhandene Poren in der ersten Schweißnaht nochmals aufgeschmolzen und somit besser ausdiffundieren können. Durch die Schutzgasführung nach der Erfindung, die später anhand der Zeichnungen näher dargestellt wird, wird der Abbrand nach außen geführt und kann sich nicht auf der Schweißstelle ablagern.

Die erste Schweißnaht wird zwar als Wurzel-Schweißnaht bezeichnet. Das erfindungsgemäße Verfahren kann jedoch mehrfach hintereinander wiederholt ablaufen, so dass auch mehrere übereinander liegende Schweißnähte angefertigt werden können. Die Wurzelschweißnaht kann deshalb auch eine Zwischenlage bilden und von einer entsprechenden Decklage überdeckt werden. Es können also derartige Schweißnähte nicht nur zweifach, sondern auch vierfach oder sechsfach übereinander angeordnet sein.

Durch die Tatsache bedingt, dass die unterste Schweißnaht zwar nur noch heiß aber nicht mehr flüssig ist und dann von der anderen Schweißnaht wieder aufgeschmolzen wird, ergibt sich der Vorteil, dass man in dieser Zwangsposition PC schweißen kann, weil sich ein qualitativ hochwertiges Schweißergebnis ergibt, nachdem die vorhandenen Poren durch die nachlaufende Schweißnaht wieder aufgeschmolzen werden und damit verschwinden.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Seitenansicht einer Doppelschweißdüse bei der Anfertigung einer Schweißnaht in PC.
- Figur 2:: Die Draufsicht auf die Anordnung nach Figur 1.
- Figur 3:: Die Stirnansicht auf die Anordnung nach Figur 1 und 2.

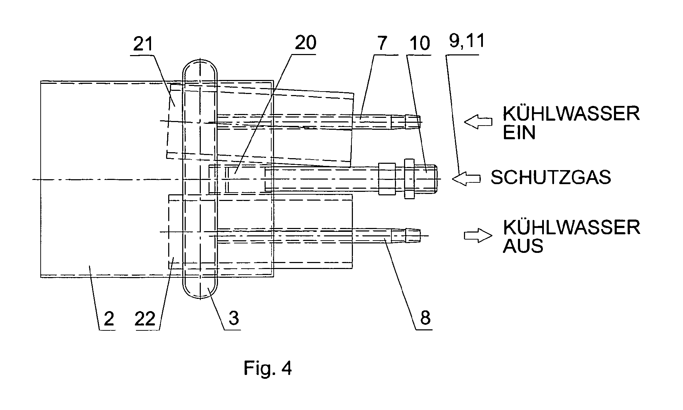

- Figur 4:: Schematisiert ein Schnitt durch die Anordnung nach Figur 2 bei entfernten Brennerdüsen.
- Figur 5:: Die um 90 Grad gedrehte Lage im Vergleich zu Figur 4.
- Figur 6:: Die Stirnansicht auf ein Werkstück mit Anbringung der Doppelschweißnaht.
- Figur 7:: Schematisiert einen Schnitt durch die Anordnung mit Darstellung der Strömungsverhältnisse in dem Schutzgasmantelkörper 2.
- Figur 8:: schematisiert einen Schnitt durch die Doppelschweißdüse

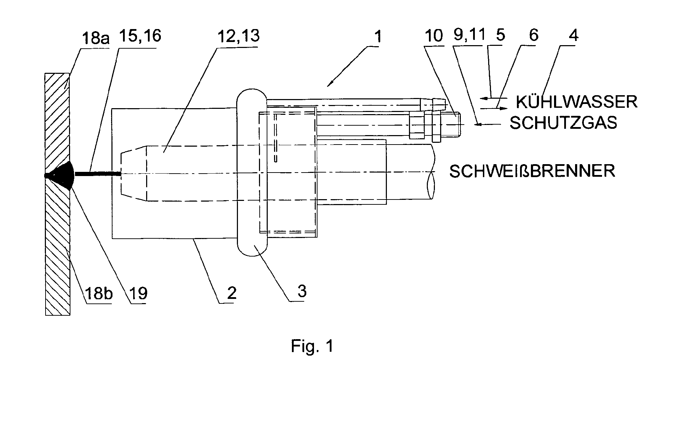

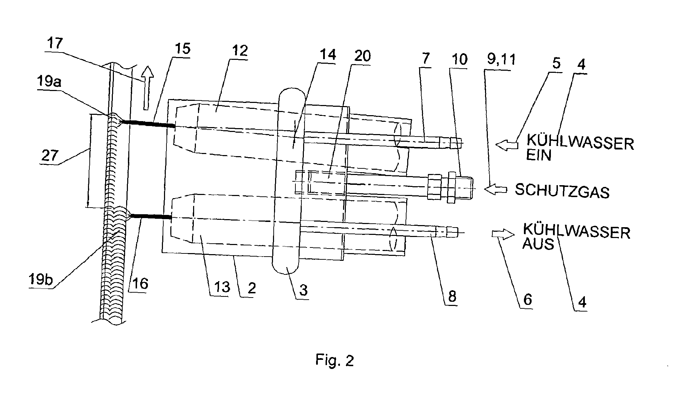

In Figur 1 und 2 ist allgemein eine Doppelschweißdüse 1 dargestellt, in deren Schutzgasmantelkörper 2 insgesamt zwei Brennerdüsen 12, 13 in gegenseitigem Abstand zueinander angeordnet sind.

Von besonderem Vorteil ist es hierbei, dass die Brennerdüse 12, welche den Schweißdraht 15 gegen das zu schweißende Werkstück 18 führt, einen Vorlaufwinkel 14 zur Horizontalen hat, wie dies in Figur 2 dargestellt ist.

Die untere Brennerdüse 13, welche mit dem Schweißdraht 16 die Decknaht 19 b einer Doppelschweißnaht 19 herstellt, ist hingegen im Winkel von 90 Grad genau zur Oberfläche des Werkstückes 18 ausgerichtet.

Auf diese Weise wird dafür gesorgt, dass der Schweißdraht 15 der im Winkel vorlaufende Brennerdüse 12 zunächst eine dünne Wurzelnaht 19 a anfertigt, die dann nachfolgend - bei Vorschub der Doppelschweißdüse 1 in Vorschubrichtung 17 von der Decknaht 19 b überdeckt und in das flüssige Material mit aufgenommen wird. Es kommt also am Ort der Doppelschweißnaht 19 zu einer Vermischung beider Schweißlagen.

Im vorliegenden Ausführungsbeispiel ist lediglich dargestellt, dass die obere Brennerdüse 12 einen Vorlaufwinkel 14 in Bezug zu der unteren Brennerdüse 13 aufweist, mit dem Ziel, dass der gegenseitige Abstand 27 zwischen den Schweißdrähten 15, 16 und den im Bereich der Schweißdrähte 15, 16 entstehenden Lichtbogen entsprechend zu vergrößern. Die beiden Lichtbögen im Bereich der Schweißdrähte 15, 16 sollen sich nicht gegenseitig stören und überlagern.

Es wird hierbei bevorzugt, wenn also die vorlaufende Brennerdüse 12 den genannten Vorlaufwinkel 14 aufweist.

Hierauf ist die vorliegende Erfindung jedoch nicht beschränkt. Es könnte auch vorgesehen sein, dass die untere Brennerdüse 13 einen entsprechenden Nachlaufwinkel aufweist oder dass beide Brennerdüsen jeweils einen Winkel aufweisen, wobei die obere Brennerdüse den Vorlaufwinkel 14 und die untere Brennerdüse 13 den Vorlauf wie einen entgegengesetzten Nachlaufwinkel aufweist.

Die beiden Brennerdüsen 12, 13 wären dann symmetrisch antiparallel zu der Oberfläche des Werkstückes 18 ausgerichtet.

Der Schutzgasmantelkörper 2 wird von einem Kühlmantel 3 umgeben, bei dem über den Einlassstutzen 7 Kühlwasser 4 in Pfeilrichtung 5 einfließt und aus dem Auslassstutzen 8 in Pfeilrichtung 6 wieder ausfließt.

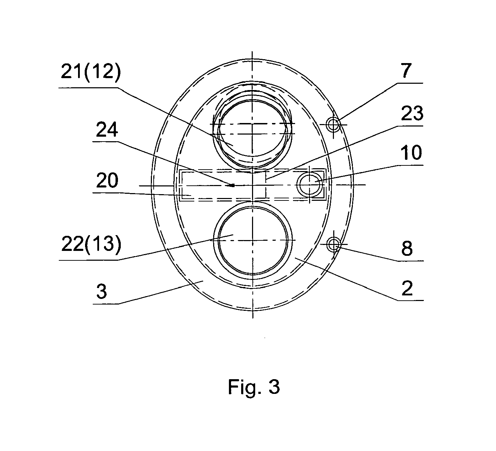

Über den Einlassstutzen 10 strömt das Schutzgas 11 in Pfeilrichtung 9 ein und mündet in den Schutzgasmantelkörper 2 entsprechend den nachher dargestellten Zeichnungen nach den Figuren 3, 6 und 7.

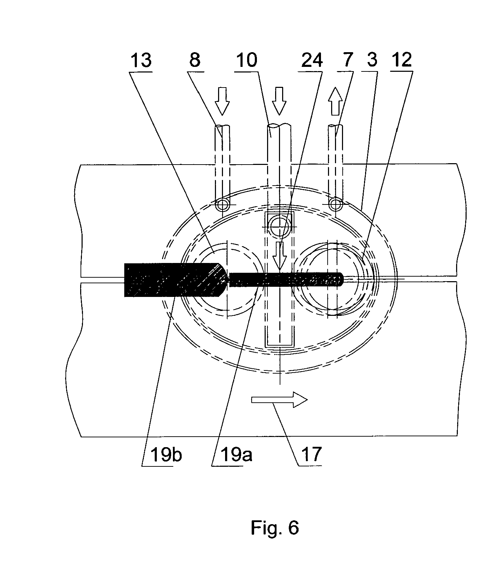

Zur besseren Verteilung des Schutzgases im Schutzgasmantelkörper 2, ist am Einlass des Einlassstutzens 10 in den Schutzgasmantelkörper 2 gem. Figur 6 ein Prallblech 20 angeordnet, welches dafür sorgt, dass das eingeströmte Schutzgas in Pfeilrichtung 24 nach unten abgeleitet wird (siehe auch Figur 6).

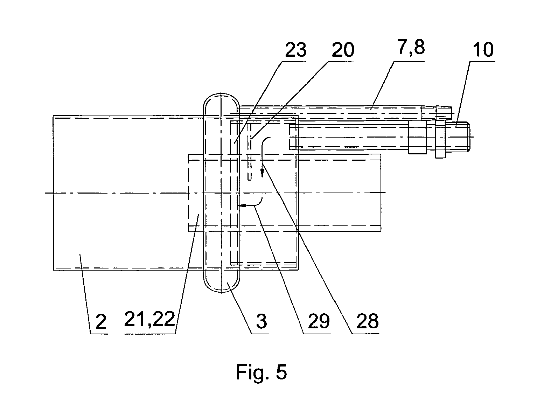

Gleichzeitig ist im Bereich dieses Prallbleches 20 ein Umlenkblech 23 angeordnet, welches gem. Figur 5 das aus dem Einlassstutzen 10 ausströmende Schutzgas 11 in Pfeilrichtung 28 nach unten umlenkt, sodass es über die Stirnseite des Umlenkbleches 23 in den Schutzgasmantelkörper 2 eingebracht wird.

Dies zeigt auch die Figur 3, wo erkennbar ist, dass das Schutzgas 11 in Pfeilrichtung 24 entlang strömt.

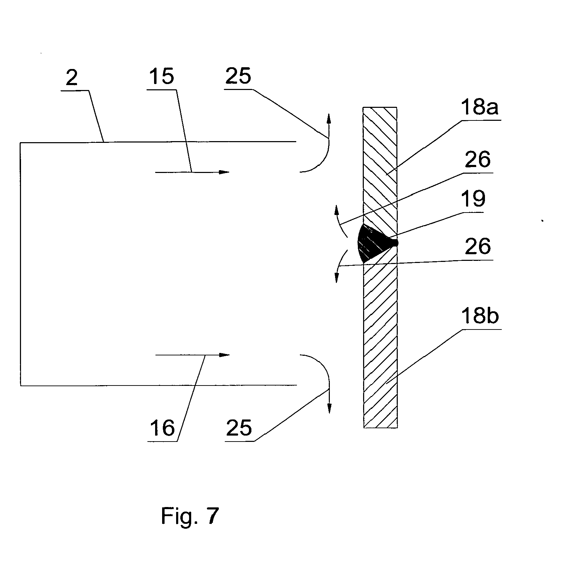

Figur 7 zeigt schematisiert die Druckverhältnisse und die Strömungsverhältnisse des Schutzgases in Verbindung mit dem ausgasenden Schweißbad in der Doppelschweißnaht 19.

Es ist erkennbar, dass die beiden Schweißdrähte 15, 16 in dem Schutzgasmantelkörper 2 zugeführt werden und hierbei das Schutzgas in Pfeilrichtung 25 randseitig aus dem Schutzgasmantelkörper 2 austritt, wenn es das Schweißbad der Doppelschweißnaht 19 überstrichen hat.

Nachdem aber der Druck des Schutzgases 11 im Schutzgasmantelkörper 2 geringer ist als der Ausgasdruck der ausgasenden Gase aus der Doppelschweißnaht 19, die in Pfeilrichtung 26 ausgasen, wird ein Gasstrom aus dem Schweißbad in Pfeilrichtung 25 von dem Schutzgas 11 mitgenommen und nach außen abgeführt.

Damit wird eine zuverlässige Entgasung der Doppelschweißnaht 19 gewährleistet, was bisher noch nicht bekannt war.

Auf diese Weise kann mit sehr hohen Vorschubgeschwindigkeiten eine ausgezeichnete Qualität bei einem einseitigen Schweißprozess erzielt werden.

Von besonderem Vorteil können also Werkstücke aus Aluminium liegend oder stehend geschweißt werden, wobei die Materialstärken im Bereich von 4 bis 40 mm verbunden werden können.

Die Größe des Schutzgasmantelkörpers 2 muss so gewählt werden, dass zuverlässig beide an den Schweißdrähten 15, 16 entstehenden Lichtbögen im Innenraum des Schutzgasmantelkörpers 2 aufgenommen werden.

Aus diesem Grund ist gem. Figur 6 auch der Schutzgasmantelkörper 2 oval ausgebildet, um eine möglichst gute Überdeckung der beiden im Bereich der Schweißdrähte 15, 16 entstehenden Lichtbögen zu erreichen, ohne dass eine große Höhe (siehe Figur 6) des Schutzgasmantelkörpers 2 erforderlich ist.

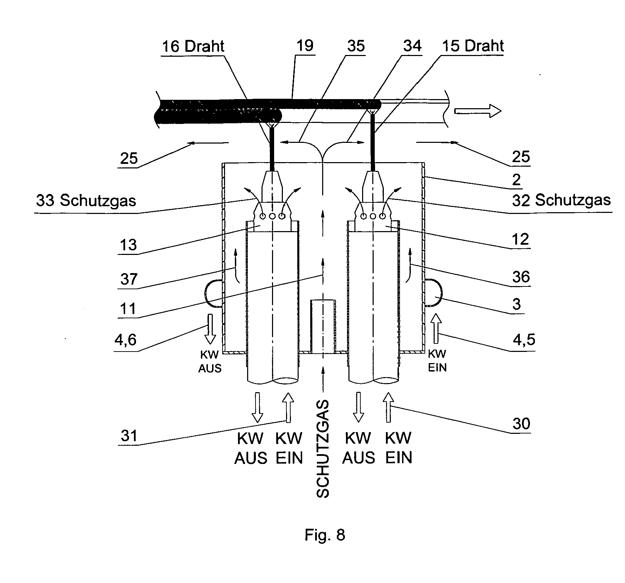

In Figur 8 ist schematisiert eine Ausführung einer Doppelschweißdüse 1 dargestellt. Zunächst wird festgestellt, dass in den Schutzgasmantelkörper ein erster Schutzgasstrom 11 eingeführt wird, der etwa mittig in den Schutzgasmantelkörper 2 eingeführt wird. Der Schutzgasmantelkörper ist entsprechend den vorher gegebenen Beschreibungen mit einem Kühlmantel 3 umgeben, der von einem ersten Kühlwasserstrom durchflossen ist.

Wichtig ist nun, dass jeder Brennerdüse 12, 13 ein weiterer eigener Kühlwasserkreislauf 30, 31 zugeordnet ist, dass jede Brennerdüse auch individuell von dem Kühlwasserkreislauf durchströmt ist.

Ferner ist wesentlich, dass jeder Brennerdüse 12, 13 eine eigene Schutzgasführung 32, 33 zugeordnet ist, so dass sich die in Figur 8 dargestellten Schutzgasströme rings um die jeweilige Brennerdüse 12, 13 ergeben. Die Schutzgaszuführungen 32, 33 im Vergleich zu dem Hauptschutzgasstrom 11 sind in ihrem Volumen unterschiedlich. Die Literzahl des Schutzgases 11 ist geringer als die Literzahl des Schutzgases einer Schutzgaszuführung 32, 33.

Der Schutzgasstrom 11 teilt sich in drei Teilströme gemäß Figur 8 auf, nämlich einen mittigen Teilstrom, der sich wiederum in die Teilströme 34, 35 aufteilt und einen seitlichen Teilstrom 36, 37, der an der Innenwand des Schutzgasmantelkörpers 2 entlang strömt.

Damit werden die Brennerdüsen 12, 13 sowohl in ihrem Innenbereich als auch im Außenbereich von dem zentrischen Schutzgasstrom 11 umströmt.

Jeder Brennerdüse 12, 13 kann auch ein eigener Schutzgasstrom zugeordnet werden, wobei die Zusammensetzung des jeweiligen Schutzgasstromes unterschiedlich von dem in der anderen Brennerdüse ist.

Demzufolge hat jede Brennerdüse 12, 13 einen eigenen Schutzgasmantel und die beiden Brennerdüsen mit ihren Schutzgasmänteln sind in den gemeinsamen Schutzgasmantelkörper 2 integriert.

Die Schweißrichtung 38 ist nach rechts gerichtet. Demzufolge ergibt sich zwischen den Werkstücken 18a, 18b die erfindungsgemäße Doppelschweißnaht 19.

Der vorlaufende, erste Brenner mit der Brennerdüse 13 schweißt die Wurzel 19a, und hierbei wird Magnesium verbrannt, welches sich als Abbrand auf die seitliche Fläche der Wurzelschweißnaht 19a legt, ebenso wie auf die Nahtoberfläche.

Über den Schutzgasstrom 34, 35 wird nun dieser Nebel nach außen in Pfeilrichtung 25 abtransportiert und wird daran gehindert, sich auf der Wurzelschweißnaht 19a festzusetzen. Auf jeden Fall wird sein Absetzen auf der Wurzelschweißnaht minimiert.

Durch die nachfolgende Brennerdüse 13, welche die Decknaht 19b bzw. eine Zwischennaht oder Zwischenlage herstellt, entsteht wiederum ein Magnesium-Abbrand, der durch den Schutzgasstrom 11 wieder von dem Absetzen auf der Decknaht 19b gehindert wird, weil der Schutzgasstrom als Ringgasstrom auch in Pfeilrichtung 34 die Schweißstelle umströmt.

Der mittige Schutzgasstrom wird als in vertikaler Richtung von oben nach unten entgegen den aufsteigenden Magnesiumdämpfen in die Schutzglasglocke hineingeführt, und zwar dient hierzu das Prallblech 20 den mittigen Ringgasschutzstrom 11 zu führen.

Der Begriff Magnesium-Abbrand wird hier nur beispielhaft verstanden, denn es kann sich auch um andere Abbrand-Werkstoffe handeln, so dass nur dieser Begriff plakativ verwendet wird, ohne auf das Material des Abbrandes einzugehen.

Es handelt sich im Wesentlichen um Legierungsbestandteile, und wichtig ist, dass die Doppelschweißdüse mit dem Prallblech vertikal von oben nach unten gerichtet den Schutzgasstrom im Schutzgasmantelkörper 2 erzeugt, um den aufsteigenden Legierungsabbränden entgegenzuwirken und diese aus dem Schutzgasmantelkörper 2 herauszubefördern, bevor sich diese auf den Schweißnähten 19a, 19b im Wesentlichen ablagern können.

**Zeichnungslegende**
- 1.: Doppelschweißdüse
- 2.: Schutzgasmantelkörper
- 3.: Kühlmantel
- 4.: Kühlwasser
- 5.: Pfeilrichtung
- 6.: Pfeilrichtung
- 7.: Einlassstutzen
- 8.: Auslassstutzen
- 9.: Pfeilrichtung
- 10.: Einlassstutzen
- 11.: Schutzgas
- 12.: Brennerdüse
- 13.: Brennerdüse
- 14.: Vorlaufwinkel
- 15.: Schweißdraht (oben 12)
- 16.: Schweißdraht (unten 13)
- 17.: Vorschubrichtung
- 18.: Werkstück 18 a, 18 b
- 19.: Doppelschweißnaht 19 a Wurzel 19 b Decknaht
- 20.: Prallblech
- 21.: Steckaufnahme (Brennerdüse 12)
- 22.: Steckaufnahme (Brennerdüse 13)
- 23.: Umlenkblech
- 24.: Pfeilrichtung
- 25.: Pfeilrichtung
- 26.: Pfeilrichtung
- 27.: Abstand
- 28.: Pfeilrichtung
- 29.: Pfeilrichtung
- 30.: Kühlkreislauf
- 31.: Kühlkreislauf
- 32.: Schutzzuführung (Düse)
- 33.: Schutzzuführung (Düse)
- 34.: Teilstrom
- 35.: Teilstrom
- 36.: Teilstrom
- 37.: Teilstrom
- 38.: Schweißrichtung

## Patentansprüche

1. Verfahren zum einseitigen Schweißen von Aluminium-Schweißnähten in Position PC, wobei ein Lichtbogen in einem Schutzstrom aus einem inerten Gas zwischen der zugeführten abschmelzenden Elektrode und dem Werkstück abbrennt, **dadurch gekennzeichnet, dass** in Schweißrichtung hintereinander folgend zwei unterschiedliche Schweißnähte (19a, 19b) angeordnet werden, wobei die vorlaufende Schweißnaht (19a) die Wurzel der späteren Schweißnaht bildet, während die nachlaufende Schweißnaht (19b) die Wurzel überdeckt, sich mit dieser wurzelseitigen Schweißnaht (19a) verbindet und entweder eine Zwischenlage oder die endgültige Schweißnaht (19a, 19b) herstellt.

2. Verfahren nach Anspruch 1, **dadurch gekennzeichnet, dass** die beiden Brennerdüsen unter einer gemeinsamen Schutzgasglocke arbeiten.

3. Verfahren nach Anspruch 1 oder 2, **dadurch gekennzeichnet, dass** der Druck des Schutzgases (11) so gewählt wird, dass der Gasdruck des Bades höher ist, als der in der Schutzglocke.

4. Verfahren nach einem der Ansprüche 1 bis 3, **dadurch gekennzeichnet, dass** es am Ort der Doppelschweißnaht (19) zu einer Vermischung beider Materialien der Schweißdrähte (15, 16) kommt.

5. Vorrichtung zum einseitigen Schweißen von Schweißnähten, wobei ein Lichtbogen in einem Schutzstrom aus einem inerten Gas zwischen der zugeführten abschmelzenden Metallelektrode und dem Werkstück abbrennt, **dadurch gekennzeichnet, dass** in einer Doppelschweißdüse (1) zwei Brennerdüsen (12, 13) in einer gemeinsamen Gasglocke angeordnet sind, die auf eine gemeinsame Schweißnaht gerichtet sind.

6. Vorrichtung nach Anspruch 5, **dadurch gekennzeichnet, dass** die Brennerdüse (12), welche den Schweißdraht (15) gegen das zu schweißende Werkstück (18) führt, einen Vorlaufwinkel (14) zur Horizontalen hat.

7. Vorrichtung nach Anspruch 5 oder 6, **dadurch gekennzeichnet, dass** die untere Brennerdüse (13), welche mit dem Schweißdraht (16) die Decknaht (19 b) einer Doppelschweißnaht (19) herstellt, im Winkel von 90 Grad zur Oberfläche des Werkstückes (18) ausgerichtet ist.

8. Vorrichtung nach einem der Ansprüche 5 bis 7, **dadurch gekennzeichnet, dass** ein Prallblech (20) am Einlass des Einlassstutzens (10) angeordnet ist.

9. Vorrichtung nach einem der Ansprüche 5 bis 8, **dadurch gekennzeichnet, dass** im Bereich dieses Prallbleches (20) ein Umlenkblech (23) angeordnet ist.

10. Vorrichtung nach einem der Ansprüche 5 bis 9, **dadurch gekennzeichnet, dass** der Schutzgasmantelkörper (2) oval ausgebildet ist, um eine möglichst gute Überdeckung der beiden im Bereich der Schweißdrähte (15, 16) entstehenden Lichtbögen zu erreichen.

11. Vorrichtung nach einem der Ansprüche 5 bis 10, **dadurch gekennzeichnet, dass** bei einem gegebenen Brennerabstand zwischen den Brennerdüsen (12, 13) von etwa 50 bis 100 mm, die vorlaufende Wurzelschweißnaht (19a) eine annähernd gleiche Länge von 50 bis 100 mm aufweist, während die nachlaufende Decknaht (19b) mit der vorlaufenden Wurzelschweißnaht (19a) vermischt und in Überdeckung gebracht wird.

12. Vorrichtung nach einem der Ansprüche 5 bis 1, **dadurch gekennzeichnet, dass** sie zur Anwendung des Verfahrens nach einem der Ansprüche 1 bis 4 geeignet ist.
